Europäisches Patentamt

European Patent Office

Office européen des brevets

(11) Publication number: **0 066 939**

**B1**

## (12) EUROPEAN PATENT SPECIFICATION

(45) Date of publication of patent specification: **03.12.86**

(51) Int. Cl.⁴: **F 16 D 25/06**

(21) Application number: **82301225.7**

(22) Date of filing: **11.03.82**

(54) **Clutch drive member.**

(30) Priority: **22.05.81 GB 8115905**
**04.06.81 GB 8117173**
**17.10.81 GB 8131382**

(43) Date of publication of application:
**15.12.82 Bulletin 82/50**

(45) Publication of the grant of the patent:
**03.12.86 Bulletin 86/49**

(84) Designated Contracting States:
**DE FR GB**

(56) References cited:
**GB-A- 398 361**
**GB-A- 955 066**
**GB-A-1 230 568**
**US-A-2 994 229**

(73) Proprietor: **AUTOMOTIVE PRODUCTS PUBLIC LIMITED COMPANY**
**Tachbrook Road**
**Leamington Spa Warwickshire CV31 3ER (GB)**

(72) Inventor: **Stanbridge, Peter John**
**18 Staunton Road**
**Leamington Spa Warwickshire (GB)**
Inventor: **Burke, John Pius**
**27 Acacia Road**
**Leamington Spa Warwickshire (GB)**

(74) Representative: **Farrow, Robert Michael**
**Patent Department Automotive Products plc**
**Tachbrook Road**
**Leamington Spa Warwickshire CV31 3ER (GB)**

Courier Press, Leamington Spa, England.

## Description

This invention relates to a drive member for a fluid pressure engaged clutch, the drive member being of the type (hereinafter called the type referred to) comprising two generally annular components fixed together thereby defining passage means for fluid.

GB—A—955 066 discloses a clutch having a drive member of the type referred to. That drive member comprises a first, thick, annular component formed by a plate with an axially extending, peripheral annular flange forming a cylinder divided into first and second variable volume compartments by a piston of which the periphery slides along the flange. Both compartments are filled with fluid. The first compartment is disposed between one side of the piston and a reaction surface on the first plate. A clutch driven plate is disposed in the first compartment and is clamped against the reaction surface to engage the clutch in response to fluid under pressure in the second compartment on the other side of the piston pushing the piston towards the reaction surface. This movement of the piston expels fluid from the first compartment through the passage means in the first plate. The passage means comprises holes leading through the first plate from the first compartment and opening into an annular recess which is formed in the thickness of the first plate externally of the cylinder and covered by an annular second component formed by a flat relatively thin plate. Even where the recess is formed the first plate is still relatively thick which provides essential stiffness. But in order to ensure this necessary residual wall thickness at the recess, the portions of the first plate to either side of recess are excessively thick which makes the drive member heavy and adds to its axial length. Also a casting or cutting procedure to form the recess will add to construction costs as will the need for the forming and mounting of the second plate provided essentially as a mere cover for the recess.

An object of the invention is to provide a utilitarian construction capable of producing a drive member which is rigid and light in weight and of short axial length, and in which the provision of ducts for fluid can contribute to the attainment of objective.

According to the invention a drive member of the type referred to is characterised in that one of said annular members is corrugated to define a plurality of radially extending box-sections which both stiffen the drive member and provide ducts for the passage of fluid, at least one of said ducts being for the passage of fluid under pressure to engage the clutch.

Such a drive member has the usual advantages of a box-section of being both light and strong and is moreover economical to manufacture.

In one embodiment the drive member comprises two annular sheet metal pressings only, the clutch including a hydraulic cylinder having a piston responsive to fluid under pressure to engage the clutch, said piston being entrained for rotation with the drive member by at least one tag sheared out of a wall of a said box-section and for location in a corresponding recess in the piston.

This provides an extremely economical and space saving way of driving the piston. Hitherto connection has been made by, for example, precision machined splines or rivetted straps between a piston and a drive member. The shearing operation forming a said tag also provides a convenient fluid opening from the box-section to the piston.

Other features of the invention are included in the following description of two preferred embodiments shown, by way of example only, in the accompanying drawings, in which:—

Fig. 1 is an axial section through one embodiment of a drive member formed according to the invention and incorporated in a fluid actuated clutch, and

Fig. 2 is an axial section through a second embodiment of a drive member formed according to the invention and incorporated in a fluid actuated clutch in combination with a torque converter.

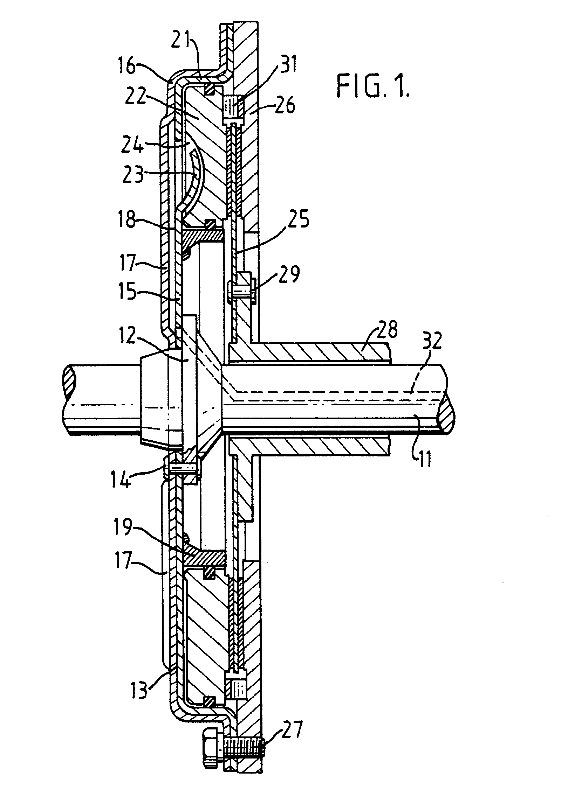

With reference to Fig. 1 a clutch input shaft 11 has a radial flange 12 to which a clutch drive member 13 is attached by rivets 14.

The drive member 13 comprises inner and outer annular metal pressings, respectively 15 and 16, fixed together at circumferentially spaced regions for example, by soldering, welding or adhesives. The outer pressing 16 has radial ribs 17 pressed therein in the manner of corrugations to form radial passages 18 on assembly with the inner pressing 15. On assembly the ribs 17 each complete a box-section which substantially stiffens the radial wall of the cover member.

An annular wall 19 is attached to the inner pressing 15, by for example welding, and together with an axial portion 21 of the drive member 13, defines a hydraulic chamber for an annular piston 22.

Tags 23 sheared out of the inner pressing 15 locate in recesses 24 of the piston 22 to both prevent relative angular movement between the piston 22 and drive member 13 and provide fluid communication from the passages 18 to the piston. The tags 23 allow limited axial movement of the piston 22 relative to the drive member 13.

A clutch driven plate 25 has friction linings for engagement respectively with the piston 22 and a reaction plate 26 attached to the drive member 13 by screws 27.

The plate 25 is attached to an output shaft 28 by rivets 29. An annular corrugated return spring 31 acts to urge the reaction plate 26 and piston 22 apart.

A fluid passage 32 is provided in the input shaft 11 for communication with the radial passages 18.

In operation fluid pressure is admitted through the passages 32 and 18 to urge the piston 22 against the effect of the return spring 31 to clamp the driven plate 25.

It may be seen that the drive member 13 is very narrow whilst being inherently stiff, as a consequence the member 13 is both space saving and light.

It will be realised that the shape and number of tags 23 and corresponding recesses 24 may be dependent on the size and duty of the clutch but that it is their function rather than the particular shape chosen which is the primary factor.

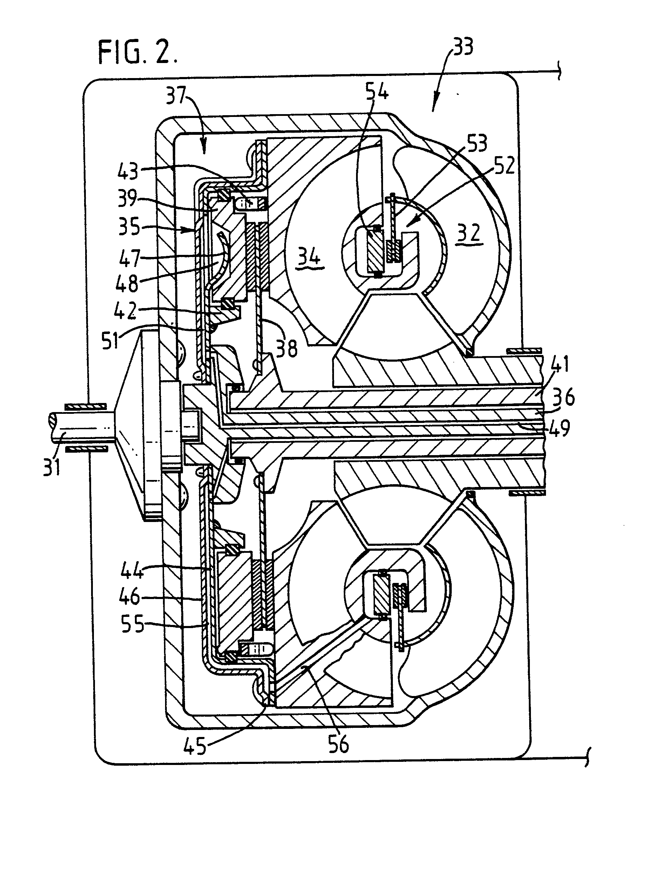

With reference to Fig. 2 there is shown drive member having separate ducts for the passage of fluid under pressure to actuate two clutches.

An input shaft 31 is connected to the impeller 32 of a torque converter 33. The turbine 34 is connected to a drive member 35 which in turn drives an output shaft 36.

A clutch 37 is enclosed within the impeller housing and includes a driven plate 38 engageable with a drive face of the turbine 34, by an annular piston 39, the plate 38 being connected to an annular shaft 41 co-axial about the output shaft 36.

A hydraulic chamber for the piston 39 is defined by the drive member 35 and by an annular cylinder 42 welded to the member 35. A corrugated return spring 43 is provided between the piston 39 and the turbine 34.

The drive member 35 comprises inner and outer metal pressings, respectively 44 and 45, fixed together at circumferentially spaced regions by, for example, soldering, welding or adhesives. The outer pressing 45 has radial ribs 46 pressed therein to form radial passages on assembly with the inner pressing 44. Each rib 46 forms part of a radial box-section which substantially stiffens the radial wall of the drive member.

Tags 47 sheared out of the inner pressing 44 locate in recesses 48 of the piston 39 to prevent relative angular movement between the piston and the drive member 35, as previously described.

Fluid under pressure to actuate the clutch 37 is supplied through a bore 49 of the output shaft 36 through one or more radial passages 51 formed by the radial ribs 46. The sheared tag 47 conveniently provides fluid communication from the passage 51 to the back face of the piston 39.

A lock up clutch 52, housed in the torus of the torque converter, is provided to couple together the impeller 32 and turbine 34 at low speed differentials. The clutch plate 53 is engaged by a piston 54 dogged to and slidable in an annular bore of the turbine 34.

Fluid under pressure to actuate the lock up clutch 52 is supplied through the annular space between the shafts 36 and 41 and at least one other radial passage 55 formed by the radial ribs 46. A fluid duct 56 through the turbine blading provides fluid communication to the back face of the piston 54.

In operation either of the clutches 37 and 52 can be independently engaged by admission of fluid under pressure to the appropriate actuating piston. The box-section construction of the drive member 35 provides a light strong component which takes up little axial length whilst being very economical to manufacture. The number of fluid passages 51, 55 can be chosen to suit the operating conditions of the appropriate clutch and also the number and size of the tags 47.

In use the torque converter 33 may be used to drive a vehicle transmission through the output shaft 36 and a power take off device through the clutch 37 and the output shaft 41.

Alternatively the torque converter and clutch may be used in a rotary transmission of the type disclosed in EP—A—34 412 and where all speed ratios are driven through the torque converter.

Other types of dual clutch device using a drive member as described may be envisaged, for example a conventional dual clutch for a motor vehicle having one clutch for vehicle drive and another for a power take off device.

Further radial ducts may be used for supply of fluid for other purposes, for example cooling.

**Claims**

1. A drive member (13, 35) for a fluid pressure engaged clutch comprising two generally annular components (15, 16; 44, 45) fixed together thereby defining passage means (18; 51, 55) for fluid, characterised in that one of said annular components (16; 45) is corrugated (17; 46) to define a plurality of radially extending box-sections which both stiffen the drive member (13; 35) and provide ducts (18; 51, 55) for the passage of fluid, at least one of said ducts (18; 51) being for the passage of fluid under pressure to engage the clutch.

2. A drive member according to Claim 1, characterised in that an axially extending portion of one of said annular components (15; 44) defines a wall (21) of a hydraulic cylinder responsive to fluid under pressure in said duct or ducts (18; 51) to engage the clutch.

3. A drive member according to Claim 2, characterised in that the drive member (13; 35) comprises two sheet metal pressings (15, 16; 44, 45) only.

4. A drive member according to Claim 3, characterised in that a tag (23; 47) sheared out of a wall of a said box-section provides both drive means for a piston (22; 39) of the cylinder and an opening for fluid communication between a said duct (18; 51) and said cylinder.

5. A drive member according to Claims 3 or 4, characterised in that at least one of said ducts (55) in the drive member (35) is for passage of fluid for a second individually operable fluid pressure engageable clutch (52).

**Revendications**

1. Elément d'entraînement (13, 35) pour embrayage mis en prise par pression hydraulique comprenant deux composants sensiblement annulaires (15, 16; 44, 45) fixés ensemble et délimitant ainsi des moyens formant passage (18; 51, 55) pour un fluide caractérisé en ce que l'un des composants annulaires (16; 45) est ondulé (17; 46) de façon à définir plusieurs sections en caisson s'étendant radialement et qui à la fois rigidifient l'élément d'entraînement (13; 35) et fournissent des conduits (18; 51, 55) pour le passage du fluide, au moins l'un desdits conduits (18; 51) étant destiné au passage du fluide sous pression servant à mettre l'embrayage en prise.

2. Elément d'entraînement selon la revendication 1, caractérisé en ce qu'une partie de l'un desdits composants annulaires (15; 44) qui s'étend axialement constitue une paroi (21) d'un vérin hydraulique travaillant à l'aide d'un fluide sous pression se trouvant dans le ou lesdits conduits (18; 51) de façon à mettre l'embrayage en prise.

3. Elément d'entraînement selon la revendication 2, caractérisé en ce que l'élément d'entraînement (13; 35) ne comprend que deux pièces en feuille métallique emboutie (15, 16; 44, 45).

4. Elément d'entraînement selon la revendication 3, caractérisé en ce qu'une patte (23; 47) réalisée par crevé dans une paroi de l'une desdites sections en caisson fournit à la fois des moyens d'entraînement pour un piston (22; 39) du vérin et une ouverture pour la communication du fluide entre l'un desdits conduits (18; 51) et ledit vérin.

5. Elément d'entraînement selon les revendications 3 ou 4, caractérisé en ce qu'au moins l'un desdits conduits (55) ménagés dans l'élément d'entraînement (35) est destiné au passage du fluide pour un second embrayage (52) pouvant être mis en prise par pression hydraulique et manoeuvrable individuellement.

**Patentansprüche**

1. Antriebsteil (13, 35) für eine mit Strömungsmitteldruck betätigte Kupplung, mit zwei im allgemeinen ringförmigen Bauteilen (15, 16; 44, 45), die fest miteinander verbunden sind, um dadurch eine Durchgangsanordnung (18; 51, 55) für das Strömungsmittel zu bilden, dadurch gekennzeichnet, daß eines der ringförmigen Bauteile (16; 45) gewellt (17; 46) ist, um eine Vielzahl von radial verlaufenden Kastenquerschnitten zu bilden, die sowohl das Antriebsteil (13; 35) versteifen und Kanäle (18; 51, 55) für den Durchgang von Strömungsmittel bereitstellen, wobei mindestens einer der Kanäle (18; 51) für den Durchgang von unter Druck stehendem Strömungsmittel zum Einrücken der Kupplung ist.

2. Antriebsteil nach Anspruch 1, dadurch gekennzeichnet, daß ein axial verlaufender Abschnitt von einem der ringförmigen Bauteile (15; 44) eine Wand (21) eines Hydraulikzylinders bildet, der auf unter Druck stehendes Strömungsmittel in dem Kanal oder den Kanälen (18; 51) anspricht, um die Kupplung einzurücken.

3. Antriebsteil nach Anspruch 2, dadurch gekennzeichnet, daß das Antriebsteil (13; 35) nur zwei Preßteile (15, 16; 44, 45) aus Blech aufweist.

4. Antriebsteil nach Anspruch 3, dadurch gekennzeichnet, daß ein Anhängsel (23; 47), das aus einer Wand eines Kastenquerschnittes herausgeschnitten ist, sowohl eine Antriebseinrichtung für einen Kolben (22; 39) des Zylinders als auch eine Öffnung zur Strömungsmittelverbindung zwischen einem Kanal (18; 51) und dem Zylinder schafft.

5. Antriebsteil nach Anspruch 3 oder 4, dadurch gekennzeichnet, daß mindestens einer der Kanäle (55) in dem Antriebsteil (35) für den Durchgang von Strömungsmittel für eine zweite unabhängig betätigbare durch Strömungsmitteldruck einrückbare Kupplung (52) ist.

FIG. 1.

FIG. 2.